# EUROPÄISCHE PATENTSCHRIFT

(11) **EP 3 068 690 B1**
(45) Veröffentlichungstag und Bekanntmachung des Hinweises auf die Patenterteilung: **13.09.2017**
(21) Anmeldenummer: 14796074.4
(22) Anmeldetag: 07.11.2014
(51) Int. Cl.: B64D 11/06

(54) **SITZBEFESTIGUNGSVORRICHTUNG**
SEAT ATTACHMENT DEVICE
DISPOSITIF DE FIXATION DE SIÈGE

(30) Priorität: 14.11.2013 DE 102013112561
(43) Veröffentlichungstag der Anmeldung: 21.09.2016
(73) Patentinhaber: Recaro Aircraft Seating GmbH & Co. KG, 74523 Schwäbisch Hall (DE)
(72) Erfinder: SCHUMM, Andreas, 74670 Forchtenberg (DE)
(74) Vertreter: Daub, Thomas
(86) Internationale Anmeldenummer: PCT/EP2014/074077
(87) Internationale Veröffentlichungsnummer: WO 2015/071195

(56) Entgegenhaltungen:
- FR-A1- 2 697 058
- US-A- 4 648 735
- US-A1- 2006 237 940

## Beschreibung

### Stand der Technik

Die Erfindung betrifft eine Sitzbefestigungsvorrichtung nach dem Oberbegriff des Patentanspruchs 1. Eine solche Sitzbefestigungsvorrichtung wurde schon in Dokument US4648735 offenbart. Die Aufgabe der Erfindung besteht insbesondere darin, eine gattungsgemäße Vorrichtung mit verbesserten Eigenschaften hinsichtlich einer Montagefreundlichkeit und Wiederverwendbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sitzbefestigungsvorrichtung, insbesondere einer Flugzeugsitzbefestigungsvorrichtung, zur Befestigung eines Sitzelements, insbesondere eines Sitzbodens, an einem Tragelement, mit einem Anbindungsmodul, das zur Anbindung an das Tragelement dazu vorgesehen ist, das Tragelement in einem montierten Zustand zumindest teilweise in einer Umfangsrichtung zu umschließen.

Es wird vorgeschlagen, dass die Sitzbefestigungsvorrichtung ein Fixiermodul aufweist, das im montierten Zustand über zumindest eine lösbare Koppelstelle mit dem Anbindungsmodul verbunden ist und das Tragelement teilweise umschließt. Unter einem "Sitzelement" soll dabei insbesondere ein Element des Sitzes, insbesondere ein Element, das einen Untergrund für eine Sitzfläche ausbildet, wie insbesondere ein Sitzboden, der beispielsweise in Form einer Halbschale aus Kunststoff, Metall, und/oder Organoblech gebildet ist, verstanden werden. Unter einem "Tragelement" soll dabei insbesondere ein Element eines Sitzes, insbesondere ein Teil eines Rahmens des Sitzes verstanden werden, wobei das Tragelement vorzugsweise als ein Querrohr ausgebildet ist, das parallel zu einer Querrichtung des Sitzes verläuft. Das Tragelement ist dabei vorzugsweise als ein vorderes Querrohr ausgebildet, das in einem vorderen Bereich des Sitzes verläuft. Unter einem "Anbindungsmodul" soll dabei insbesondere ein Modul verstanden werden, das sowohl Elemente zur Anbindung an das Tragelement als auch Elemente zur Anbindung an das Sitzelement aufweist. Das Sitzelement ist in montiertem Zustand über das Anbindungsmodul mit dem Tragelement verbunden. Unter "zumindest teilweise in Umfangsrichtung umschließen" soll dabei insbesondere verstanden werden, dass das Anbindungsmodul das Tragelement in einem Winkel umschließt, der insbesondere kleiner ist als 360 Grad. Unter einem "Fixiermodul" soll dabei insbesondere ein Modul verstanden werden, das zur Sicherung eines anderen Elements, wie insbesondere des Anbindungsmoduls, vorgesehen ist. Dabei fixiert das Fixiermodul das Anbindungsmodul an dem Tragelement und verhindert in einem an dem Anbindungsmodul angebrachten Zustand ein Lösen des Anbindungsmoduls von dem Tragelement. Unter einer "lösbaren Koppelstelle" soll dabei insbesondere eine Koppelstelle verstanden werden, über die zwei Elemente, wie insbesondere das Anbindungsmodul und das Fixiermodul, miteinander gekoppelt werden können, wobei die Kopplung der beiden Elemente zerstörungsfrei wieder gelöst werden kann. Die Verbindung und Trennung der beiden Elemente über die lösbare Koppelstelle sind dabei beliebig oft wiederholbar. Unter "teilweise umschließen" soll dabei insbesondere verstanden werden, dass das Fixiermodul das Tragelement über einen Winkel von kleiner als 359 Grad, vorzugsweise über einen Winkel von kleiner als 181 Grad umschließt. Unter "teilweise umschließen" soll dabei insbesondere verstanden werden, dass das Fixiermodul das Tragelement nicht vollkommen umschließt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann das Anbindungsmodul besonders einfach und insbesondere mittels eines wiederverwendbaren Fixiermoduls an dem Tragelement fixiert werden. Dadurch kann eine Anbindung eines Sitzelements an das Tragelement insbesondere montagefreundlich gestaltet werden und das Anbindungsmodul nach dem Lösen der Fixierung durch das Fixiermodul, beispielsweise zur Durchführung einer Wartung, mittels desselben Fixiermoduls wieder fixiert werden.

Weiter wird vorgeschlagen, dass das Fixiermodul als eine Halbschale eines Schellenelements ausgebildet ist. Unter einem "Schellenelement" soll dabei insbesondere ein Element verstanden werden, das dazu vorgesehen ist, ein anderes Element, wie in diesem Fall insbesondere das Tragelement, zur Befestigung eines weiteren Elements zu umschließen. Das Schellenelement ist dabei vorzugsweise von zwei Halbschalen gebildet, die dazu vorgesehen sind, miteinander verbunden zu werden, um das andere Element, wie insbesondere das Tragelement, zumindest teilweise zu umschließen. Dabei umschließen die beiden Halbschalen das andere Element, wie insbesondere das Tragelement, vorzugsweise vollständig, wobei die beiden Halbschalen vorzugsweise jeweils einen gleich großen Teil des Tragelements umschließen. Dadurch kann das Fixiermodul besonders vorteilhaft und einfach ausgebildet werden.

Des Weiteren wird vorgeschlagen, dass das Anbindungsmodul zumindest einen Grundkörper umfasst, der als eine Halbschale eines Schellenelements ausgebildet ist. Dadurch kann das Anbindungsmodul besonders vorteilhaft zu einer einfachen Kopplung mit dem Fixiermodul ausgebildet werden.

Weiterhin wird vorgeschlagen, dass das Anbindungsmodul zumindest ein Anbindungselement umfasst, das in zumindest einem montierten Betriebszustand verschiebbar mit dem Grundkörper verbunden ist. Unter einem "Anbindungselement" soll dabei insbesondere ein Element verstanden werden, mittels dessen ein Element, wie insbesondere ein Sitzelement, fest an dem Anbindungsmodul fixierbar ist. Dabei weist das Anbindungselement vorzugsweise zumindest eine Aufnahme auf, in der ein Bolzen zur Verbindung mit dem Sitzelement angeordnet ist. Dabei ist in der zumindest einen Aufnahme des Anbindungselements vorzugsweise eine Buchse angeordnet, über die sich das Anbindungselement zu dem Bolzen verdrehen kann. Unter einem "montierten Betriebszustand" soll in diesem Zusammenhang insbesondere ein Zustand verstanden werden, in dem das Anbindungselement konstruktionsgemäß korrekt mit dem Grundkörper des Anbindungsmoduls gekoppelt ist. Unter "verschiebbar verbunden" soll dabei insbesondere verstanden werden, dass das Anbindungselement entlang einer Bewegungsachse zu dem Grundkörper verschiebbar ist. Dadurch kann das Sitzelement über das Anbindungselement vorteilhaft an das Anbindungsmodul angebunden und dabei eine Position des Sitzelements zu dem Tragelement vorteilhaft verändert werden.

Es wird zudem vorgeschlagen, dass das Anbindungselement dazu vorgesehen ist, formschlüssig mit dem Grundkörper verbunden zu werden. Unter "formschlüssig" soll insbesondere verstanden werden, dass aneinander liegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Dadurch kann das Anbindungselement besonders einfach verschiebbar mit dem Grundkörper verbunden werden.

Weiter wird vorgeschlagen, dass der Grundkörper zur Anbindung des Anbindungselements wenigstens ein Formschlusselement aufweist, das als ein Führungselement ausgebildet ist. Darunter, dass das "Formschlusselement als ein Führungselement ausgebildet ist", soll dabei insbesondere verstanden werden, dass das Formschlusselement einem mit dem Formschlusselement verbundenen korrespondierend ausgebildeten Formschlusselement zumindest in einer Bewegungsachse einen Freiheitsgrad vorgibt, sodass sich das verbundene Formschlusselement in einem mit dem als Führungselement ausgebildeten Formschlusselement verbundenen Zustand entlang der Bewegungsachse zu dem als Führungselement ausgebildeten Formschlusselement bewegen kann. Dabei ist das als Führungselement ausgebildete Formschlusselement beispielsweise als ein Schienenelement ausgebildet. Dadurch kann eine für das Anbindungselement besonders vorteilhafte Anbindung an den Grundkörper bereitgestellt werden.

Ferner wird vorgeschlagen, dass das Anbindungselement zumindest ein Formschlusselement aufweist, das zur formschlüssigen Verbindung mit dem Grundkörper dazu vorgesehen ist, in einen formschlüssigen Kontakt mit dem Formschlusselement des Grundkörpers zu treten. Dadurch kann das Anbindungselement besonders vorteilhaft für eine Anbindung an den Grundkörper ausgebildet werden.

Weiterhin wird vorgeschlagen, dass das Formschlusselement des Anbindungselements dazu vorgesehen ist, von radial außen mit dem Formschlusselement des Grundkörpers verbunden zu werden. Unter "von radial außen verbunden zu werden", soll dabei insbesondere verstanden werden, dass das Anbindungselement bei einem Montagevorgang, bei dem das Anbindungselement mit dem Grundkörper formschlüssig verbunden wird, vor einem formschlüssigen Kontakt von radial außen an den Grundkörper herangeführt und dann mit dem Formschlusselement des Grundkörpers verbunden wird. Grundsätzlich wäre es auch denkbar, dass es seitlich montierbar ist. Dadurch kann eine besonders vorteilhafte und einfache Montage des Anbindungselements an dem Grundkörper erreicht werden, insbesondere kann dadurch vorteilhaft erreicht werden, dass das Anbindungselement in einem Betriebszustand, in dem der Grundkörper an einem Tragelement angebunden ist, noch an den Grundkörper angebunden werden kann.

Zudem wird vorgeschlagen, dass der Grundkörper einen Anschlag aufweist, der ein Verschieben des Anbindungselements in zumindest einer Verschieberichtung auf eine Maximalstellung beschränkt. Unter einem "Anschlag" soll dabei insbesondere ein Element verstanden werden, das eine Anschlagsfläche bereitstellt, an der ein anderes Element, wie insbesondere das Anbindungselement, mit einer entsprechend ausgebildeten Anschlagsfläche in einer definierten Maximalstellung anschlagen kann, also diese kontaktiert, um so eine Bewegung der beiden Elemente zueinander in zumindest eine definierte Richtung zu begrenzen. Dabei ist der Anschlag vorzugsweise einstückig mit dem Grundkörper ausgebildet. Grundsätzlich ist es aber auch denkbar, dass der Anschlag als ein separates Bauteil ausgebildet ist, das über eine geeignete Verbindungsmethode, wie beispielsweise eine Formschlussverbindung oder eine Schraubenverbindung, in einem Montageschritt fest mit dem Grundkörper verbindbar ist. Dadurch kann eine Bewegung des Anbindungselements zu dem Grundkörper in einer Richtung vorteilhaft begrenzt werden.

Es wird weiter vorgeschlagen, dass das Anbindungselement als ein Teil des Sitzelements ausgebildet ist. Darunter, dass das "Anbindungselement als ein Teil des Sitzelements ausgebildet ist", soll dabei insbesondere verstanden werden, dass das Anbindungselement in einem vormontierten Zustand des Sitzelements fest mit dem Sitzelement verbunden ist, wobei es sowohl denkbar ist, dass das Anbindungselement mittels einer dem Fachmann als sinnvoll erscheinenden Verbindung, wie beispielsweise mittels einer Schraubenverbindung oder einer Klebeverbindung, fest mit dem Sitzelement verbunden ist, als auch, dass das Anbindungselement einstückig mit dem Sitzelement ausgebildet ist. Dadurch kann das Anbindungselement besonders vorteilhaft ausgebildet werden und das Sitzelement besonders einfach an das Anbindungsmodul montiert werden. Insbesondere vorteilhaft ist dadurch eine werkzeugfreie Montage des Sitzelements an dem Tragelement möglich.

Ferner wird vorgeschlagen, dass das Anbindungsmodul und das Fixiermodul in montiertem Zustand zusammen dazu vorgesehen sind, das Tragelement in Umfangsrichtung komplett zu umschließen. Unter "zusammen komplett zu umschließen", soll dabei insbesondere verstanden werden, dass das Anbindungsmodul und das Fixiermodul in montiertem Zustand zusammen das Tragelement zu 360 Grad umschließen. Dadurch kann das Anbindungsmodul mittels des Fixiermoduls besonders gut an dem Tragelement fixiert werden.

Ferner wird vorgeschlagen, dass die Sitzbefestigungsvorrichtung zumindest ein Verbindungselement aufweist, über das das Fixiermodul zur Verliersicherung permanent und fest mit dem Anbindungsmodul verbunden ist. Unter einem "Verbindungselement" soll dabei insbesondere ein Element verstanden werden, das sowohl fest mit dem Fixiermodul als auch fest mit dem Anbindungsmodul verbunden ist. Unter einer "Verliersicherung" soll insbesondere eine Sicherung gegen ein Verlieren, also in diesem Fall eine Sicherung dagegen verstanden werden, dass das Fixiermodul verloren geht, während es nicht mittels der lösbaren Koppelstellen mit dem Anbindungsmodul verbunden ist. Unter "permanent und fest verbunden" soll dabei insbesondere verstanden werden, dass das Fixiermodul in einem intakten Zustand des Verbindungselements stets mit dem Anbindungsmodul verbunden ist. Dadurch kann das Fixiermodul vorteilhaft an das Anbindungsmodul angebunden werden und kann dadurch insbesondere in einem demontierten Zustand oder beispielsweise während einer Montage nicht von dem Anbindungsmodul getrennt werden und somit vorteilhaft nicht verloren gehen.

Des Weiteren wird vorgeschlagen, dass das Anbindungsmodul, das Fixiermodul und das zumindest eine Verbindungselement einstückig miteinander ausgebildet sind. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Dadurch kann das Anbindungsmodul besonders einfach und vorteilhaft zusammen mit dem Fixiermodul und dem Verbindungselement hergestellt werden, wodurch die Sitzbefestigungsvorrichtung besonders vorteilhaft kostengünstig hergestellt werden kann.

Weiterhin wird vorgeschlagen, dass das Anbindungsmodul zwei sich gegenüberliegende Befestigungsarme aufweist, die dazu vorgesehen sind, das Tragelement auf jeweils einer Seite zu umgreifen, wobei jeder der Befestigungsarme ein Befestigungselement aufweist, das jeweils einen Teil einer lösbaren Koppelstelle ausbildet. Unter einem "Befestigungselement" soll dabei insbesondere ein Element verstanden werden, das mit einem korrespondierend ausgebildeten Befestigungselement zu einer festen Verbindung vorgesehen ist, wobei die feste Verbindung der beiden korrespondierend ausgebildeten Befestigungselemente über einen Form- und/oder Kraftschluss entstehen kann. Dadurch kann das Anbindungsmodul zur Bereitstellung der lösbaren Koppelstellen besonders vorteilhaft ausgebildet werden.

Weiter wird vorgeschlagen, dass das Anbindungsmodul, das Fixiermodul und das Verbindungselement gemeinsam aus einem Kunststoff gebildet sind. Dadurch können das Anbindungsmodul sowie das Fixiermodul und das Verbindungselement besonders vorteilhaft ausgebildet werden.

Zudem wird vorgeschlagen, dass das Fixiermodul zwei zu den Befestigungselementen des Anbindungsmoduls korrespondierend ausgebildete Befestigungselemente aufweist. Unter einem "korrespondierend ausgebildeten Befestigungselement" soll dabei insbesondere ein Befestigungselement verstanden werden, das so ausgebildet ist, dass es mit seinem korrespondierend ausgebildeten Befestigungselement eine durch Kraft- und/oder Formschluss herbeigeführte feste Verbindung herstellen kann. Dadurch kann die zumindest eine lösbare Koppelstelle zwischen dem Anbindungsmodul und dem Fixiermodul besonders einfach und vorteilhaft erreicht werden.

Es wird weiter vorgeschlagen, dass die Befestigungselemente als Rastelemente ausgebildet sind. Unter einem "Rastelement" soll in diesem Zusammenhang insbesondere ein federelastisches Element zur Herstellung einer Rastverbindung, das dazu vorgesehen ist, bei einer Montage elastisch ausgelenkt zu werden, oder eine Rastausnehmung, in die das federelastische Element zur Herstellung der Rastverbindung einrastet, verstanden werden. Dadurch können die Befestigungselemente besonders vorteilhaft für eine zerstörungsfrei trennbar lösbare Koppelstelle ausgebildet werden.

Weiter wird vorgeschlagen, dass das Anbindungsmodul dazu vorgesehen ist, das Tragelement in einem montierten Zustand in einer Umfangsrichtung zu mehr als 50 % zu umschließen. Unter "zu mehr als 50 % zu umschließen", soll dabei insbesondere verstanden werden, dass das Anbindungsmodul das Tragelement über einen Winkel von mehr als 180 Grad, vorzugsweise über einen Winkel von mehr als 200 Grad umschließt, wodurch ein Hintergriff des Anbindungsmoduls um das Tragelement erreicht werden kann. Dadurch kann das Anbindungsmodul besonders vorteilhaft und einfach mit dem Tragelement gekoppelt werden.

Die erfindungsgemäße Sitzbefestigungsvorrichtung soll hierbei nicht auf die oben beschriebene Anwendung und Ausführungsform beschränkt sein. Insbesondere kann die erfindungsgemäße Sitzbefestigungsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung der Sitzbefestigungsvorrichtung mit zwei Anbindungselementen,
- Fig. 2: eine von unten gesehene Schnittansicht der erfindungsgemäßen Sitzbefestigungsvorrichtung in einem ersten Ausführungsbeispiel mit einem Fixiermodul und einem Anbindungsmodul, das an einem Sitzelement befestigt ist,
- Fig. 3: eine schematische Seitenansicht der erfindungsgemäßen Sitzbefestigungsvorrichtung in dem ersten Ausführungsbeispiel mit einem Grundkörper und einem Anbindungselement des Anbindungsmoduls und dem von ihm getrennten Fixiermodul,
- Fig. 4: eine schematische Ansicht des Grundkörpers des Anbindungsmoduls in dem ersten Ausführungsbeispiel,
- Fig. 5: eine schematische Darstellung einer erfindungsgemäßen Sitzbefestigungsvorrichtung in einem zweiten Ausführungsbeispiel,
- Fig. 6: eine schematische Seitenansicht einer erfindungsgemäßen Sitzbefestigungsvorrichtung in einem dritten Ausführungsbeispiel mit einem Anbindungsmodul und einem von ihm getrennten Fixiermodul,
- Fig. 7: eine schematische Seitenansicht der Sitzbefestigungsvorrichtung mit einem zu befestigenden Sitzelement und einem Tragelement, an dem das Sitzelement angebracht ist, und
- Fig. 8: eine schematische Darstellung einer erfindungsgemäßen Sitzbefestigungsvorrichtung in einem vierten Ausführungsbeispiel mit einem Verbindungselement.

### Beschreibung der Ausführungsbeispiele

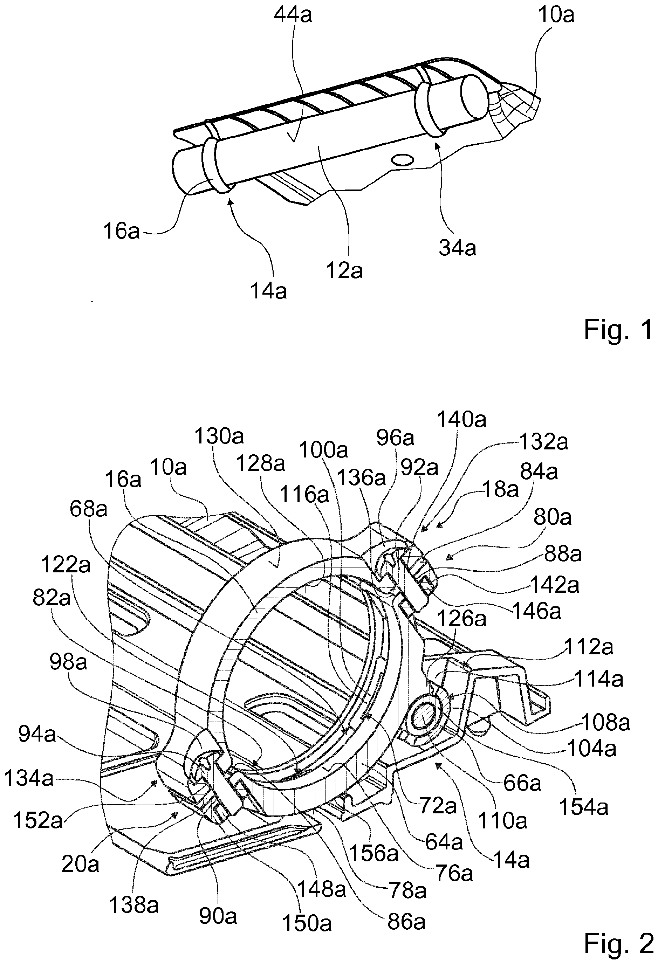

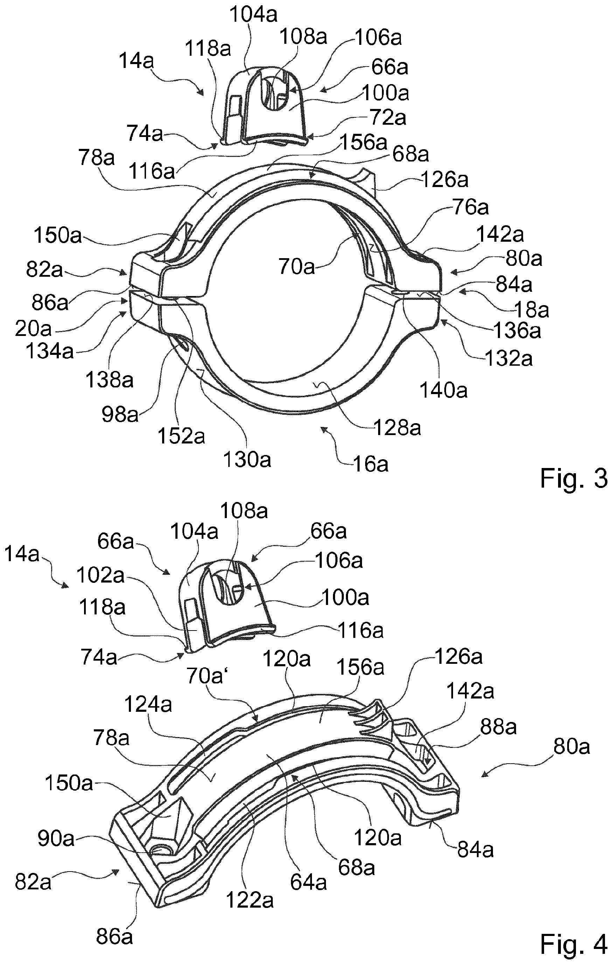

Die Figuren 1 bis 4 zeigen einen Teil eines Sitzes mit einer erfindungsgemäßen Sitzbefestigungsvorrichtung in einem ersten Ausführungsbeispiel. Die Sitzbefestigungsvorrichtung ist als eine Flugzeugsitzbefestigungsvorrichtung ausgebildet. Der Sitz ist dabei als ein Flugzeugsitz ausgebildet. Der als Flugzeugsitz ausgebildete Sitz umfasst einen teilweise dargestellten Grundrahmen, mittels dessen der Sitz auf einem Kabinenboden einer Flugzeugkabine aufständerbar ist. Der Grundrahmen umfasst zwei Tragelemente 12a, die parallel zu einer Querrichtung des Sitzes ausgerichtet sind. Das erste Tragelement 12a ist als ein vorderes Querrohr und das zweite Tragelement 12a ist als ein hinteres Querrohr ausgebildet. Der Sitz umfasst ein Sitzelement 10a. Das Sitzelement 10a ist als ein Sitzboden ausgebildet. Das als Sitzboden ausgebildete Sitzelement 10a dient zur Aufnahme eines Sitzpolsters. Das als Sitzboden ausgebildete Sitzelement 10a ist dabei als ein Schalenelement ausgebildet. Das als Sitzboden ausgebildete Sitzelement 10a ist über die als Querrohre ausgebildeten Tragelemente 12a an den Grundrahmen des Sitzes angebunden.

Zur Anbindung des als Sitzboden ausgebildeten Sitzelements 10a weist die Sitzbefestigungsvorrichtung Anbindungsmodule 14a, 34a auf. Zur Anbindung des Sitzelements 10a an das als vorderes Querrohr ausgebildete Tragelement 12a weist die Sitzbodenbefestigung zwei identisch ausgebildete Anbindungsmodule 14a, 34a auf, wobei lediglich eines der Anbindungsmodue 14a im Folgenden näher beschrieben werden soll. Zur Erläuterung des zweiten Anbindungsmoduls 34a zur Anbindung des Sitzelements 10a an das als vorderes Querrohr ausgebildete Tragelement 12a kann die folgende Beschreibung des ersten Anbindungsmoduls 14a herangezogen werden. Anbindungsmodule, die das Sitzelement 10a an das als hinteres Querrohr ausgebildete Tragelement 12a anbinden, werden im Folgenden nicht näher beschrieben, sind aber äquivalent zu den Anbindungsmodulen 14a, 34a ausgebildet. Grundsätzlich ist es aber auch denkbar, dass sie unterschiedlich zu den beschriebenen Anbindungsmodulen 14a, 34a ausgebildet sind. Grundsätzlich ist es auch denkbar, dass zur Anbindung des Sitzelements 10a eine andere Anzahl von Anbindungsmodulen 14a, 34a vorgesehen ist.

Das Anbindungsmodul 14a umfasst einen Grundkörper 64a. Der Grundkörper 64a des Anbindungsmoduls 14a ist als eine Halbschale eines Schellenelements ausgebildet. Der Grundkörper 64a weist eine Innenseite 76a auf, die einen Kreisbogen ausbildet. Dabei bildet die Innenseite 76a einen Winkelbereich von 180 Grad aus. Die Innenseite 76a des Grundkörpers 64a bildet einen Halbkreis aus. Mit der Innenseite 76a liegt der Grundkörper 64a in einem mit dem Tragelement 12a verbundenen Zustand auf dem Tragelement 12a auf. Der Grundkörper 64a weist eine Außenseite 78a auf, die ebenfalls einen Kreisbogen ausbildet. In den seitlichen Endbereichen bildet der Grundkörper 64a Koppelbereiche 80a, 82a aus, über die der als Halbschale ausgebildete Grundkörper 64a mit einer äquivalent ausgebildeten Halbschale verbindbar ist. Die Innenseite 76a des Grundkörpers 64a bildet dabei in den Koppelbereichen 80a, 82a eine ebene Koppelfläche 84a, 86a aus. Die ebenen Koppelflächen 84a, 86a verlaufen dabei eben zu einer Radialrichtung. Zur Aufnahme eines Befestigungselements 92a, 94a weist der Grundkörper 64a in den Koppelbereichen 80a, 82a jeweils ein Durchgangsloch 88a, 90a auf, das die Koppelfläche 84a, 86a schneidet. Das Durchgangsloch 88a, 90a erstreckt sich dabei von der Außenseite 78a bis an die Innenseite 76a, die die entsprechende Koppelfläche 84a, 86a ausbildet. Dadurch kann das Befestigungselement 92a, 94a durch die Durchgangslöcher 88a, 90a geführt werden. An der Außenseite 78a weist der Grundkörper 64a an jedem der Koppelbereiche 80a, 82a ein Formschlusselement 142a, 150a auf, das von Wandungen einer Ausnehmung gebildet ist. Die Ausnehmung weist dabei einen sechseckigen Querschnitt auf, sodass ein Befestigungselement 146a, 148a, wie insbesondere eine Mutter, verdrehsicher in dem entsprechenden Formschlusselement 142a, 150a angeordnet werden kann. In den Ausnehmungen, die die Formschlusselemente 142a, 150a ausbilden, sind mittig die Durchgangslöcher 88a, 90a angeordnet, durch die zur Befestigung mit einem weiteren Schalenelement jeweils ein als Schraube ausgebildetes Befestigungselement 92a, 94a geführt ist. Die Befestigungselemente 92a, 94a sind dazu vorgesehen, den Grundkörper 64a des Anbindungsmoduls 14a in einem montierten Zustand über durch die Durchgangslöcher 88a, 90a geführte Befestigungselemente 92a, 94a mit einem äquivalent ausgebildeten Modul zu verbinden.

Das Anbindungsmodul 14a umfasst ein Anbindungselement 66a. Das Anbindungselement 66a ist in montiertem Betriebszustand verschiebbar mit dem Grundkörper 64a verbunden. Das Anbindungselement 66a ist dazu vorgesehen, das Sitzelement 10a an das Anbindungsmodul 14a anzubinden. Das Anbindungselement 66a weist eine U-förmige Grundform auf. Dabei bildet das Anbindungselement 66a zwei parallel zueinander verlaufende Seitenteile 100a, 102a aus. Die beiden Seitenteile 100a, 102a sind äquivalent zueinander ausgebildet. Die beiden Seitenteile 100a, 102a sind dabei an einem ersten Ende des Anbindungselements 66a durch einen Mittelbereich 104a miteinander verbunden. Die Seitenteile 100a, 102a und der Mittelbereich 104a sind einstückig miteinander ausgebildet. Das Anbindungselement 66a ist aus einem Kunststoff gebildet. Dabei ist das Anbindungselement 66a in einem Kunststoffgussverfahren, wie vorzugsweise einem Spritzgussverfahren, hergestellt. Das Anbindungselement 66a umfasst eine Aufnahme 106a, mittels der das Anbindungselement 66a fest mit dem Sitzelement 10a verbindbar ist. Die Aufnahme 106a des Anbindungselements 66a ist von zwei koaxial angeordneten Durchgangslöchern 108a in den Seitenteilen 100a, 102a des Anbindungselements 66a gebildet. Die beiden Durchgangslöcher 108a sind äquivalent ausgebildet. Jeweils ein Durchgangsloch 108a ist in einem Seitenteil 100a, 102a des Anbindungselements 66a angeordnet. Dabei sind die Durchgangslöcher 108a in einem Bereich angeordnet, der dem ersten Ende, an dem die beiden Seitenteile 100a, 102a miteinander verbunden sind, zugewandt ist. Die Durchgangslöcher 108a weisen einen gleichen Durchmesser auf und haben dieselbe Mittelachse. Im montierten Zustand ist das Sitzelement 10a über die Aufnahme des Anbindungselements 66a an das Anbindungselement 66a angebunden. Dabei ist das Sitzelement 10a formschlüssig mit der Aufnahme 106a des Anbindungselements 66a verbunden. Zur formschlüssigen Anbindung weist das Sitzelement 10a eine Aufnahme 112a und einen Bolzen 110a auf. Die Aufnahme 112a des Sitzelements 10a ist von zwei beabstandet angeordneten Wandungen 114a gebildet, die korrespondierend zu den Durchgangslöchern 108a des Anbindungselements 66a ausgebildete Aufnahmelöcher aufweisen. In einem montierten Zustand sind die Durchgangslöcher 108a der Aufnahme 106a des Anbindungselements 66a und die Aufnahmelöcher der Aufnahme 112a des Sitzelements 10a in einer Flucht zueinander ausgerichtet. Dabei ist der Bolzen 110a durch die Aufnahmelöcher und die Durchgangslöcher 108a geführt, wodurch das Sitzelement 10a und das Anbindungselement 66a fest miteinander verbunden sind. Dabei ist das Anbindungselement 66a drehbar zu dem Sitzelement 10a befestigt. Das Anbindungselement 66a kann um einen gewissen Winkel um den Bolzen 110a zu dem Sitzelement 10a verdreht werden. Das Anbindungsmodul 14a umfasst eine Buchse 154a, die in den Durchgangslöchern 108a des Anbindungselements 66a angeordnet ist. Die Buchse 154a umschließt den Bolzen 110a. Dabei ist der Bolzen 110a in der Buchse 154a drehbar. Dadurch lässt sich das mit dem Anbindungselement 66a verbundene Sitzelement 10a über den Bolzen 110a und die Buche 154a zu dem Anbindungselement 66a verdrehen.

Das Anbindungselement 66a ist dazu vorgesehen, formschlüssig mit dem Grundkörper 64a des Anbindungsmoduls 14a verbunden zu werden. Dazu weist das Anbindungselement 66a zwei Formschlusselemente 72a, 74a auf. Die Formschlusselemente 72a, 74a sind dabei an einem zweiten, unteren Ende des Anbindungselements 66a angeordnet. Die Formschlusselemente 72a, 74a sind von den Seitenteilen 100a, 102a des Anbindungselements 66a gebildet. Auf den Seiten des zweiten Endes des Anbindungselements 66a bilden die Seitenteile 100a, 102a die Formschlusselemente 72a, 74a aus. An dem zweiten Ende bilden die Enden dabei äquivalent zu dem Grundkörper 64a einen Kreisbogen aus. Die Formschlusselemente 72a, 74a sind dabei von Erhebungen 116a, 118a gebildet, die sich in Axialrichtung von dem entsprechenden Seitenteil 100a, 102a jeweils von dem jeweils gegenüberliegenden Seitenteil 100a, 102a wegerstrecken. Die Formschlusselemente 72a, 74a erstrecken sich dabei über eine gesamte Breite des jeweiligen Seitenteils 100a, 102a. Die Erhebungen 116a, 118a, die die Formschlusselemente 72a, 74a bilden, sind dazu vorgesehen, in einem montierten Zustand in einen formschlüssigen Kontakt mit dem Grundkörper 64a des Anbindungsmoduls 14a zu treten.

Zur Anbindung an den Grundkörper 64a weist der Grundkörper 64a zwei Formschlusselemente 68a, 70a auf. Die Formschlusselemente 68a, 70a sind äquivalent zu den Formschlusselementen 72a, 74a des Anbindungselements 66a ausgebildet. In einem montierten Zustand ist das Anbindungselement 66a über seine Formschlusselemente 72a, 74a mit den Formschlusselementen 68a, 70a des Grundkörpers 64a formschlüssig verbunden. Die Formschlusselemente 68a, 70a des Grundkörpers 64a sind dabei als Führungselemente ausgebildet. In einem verbundenen Zustand können die Formschlusselemente 72a, 74a des Anbindungselements 66a in den Formschlusselementen 68a, 70a des Grundkörpers 64a entlang einer Verschiebebahn zueinander verschoben werden. Die Formschlusselemente 68a, 70a des Grundkörpers 64a sind als Führungsschienen ausgebildet, in die die Formschlusselemente 72a, 74a des Anbindungselements 66a eingreifen. Die Formschlusselemente 68a, 70a weisen jeweils einen Durchgangsschlitz 120a auf, der sich von der Außenseite 78a des Grundkörpers 64a bis zu der Innenseite 76a des Grundkörpers 64a des Anbindungsmoduls 14a erstreckt. Dadurch, dass die Durchgangsschlitze 120a der als Führungselemente ausgebildeten Formschlusselemente 68a, 70a von der Außenseite 78a des Grundkörpers 64a zu der Innenseite 76a des Grundkörpers 64a verlaufen, weisen die Formschlusselemente 68a, 70a eine bogenförmige Haupterstreckungsrichtung auf. Die Verschiebebahn, auf der die Formschlusselemente 72a, 74a des Anbindungselements 66a zu den Formschlusselementen 68a, 70a des Grundkörpers 64a verschoben werden können, entspricht der Haupterstreckungsrichtung des Grundkörpers 64a. Die Durchgangsschlitze 120a weisen in einem radial äußeren Bereich jeweils eine Breite auf, die etwas breiter ist als die Seitenteile 100a, 102a des Anbindungselements 66a, jedoch schmaler ist als die Formschlusselemente 72a, 74a des Anbindungselements 66a. Radial innen weisen die Durchgangsschlitze 120a jeweils eine Breite auf, die breiter ist als die Formschlusselemente 72a, 74a des Anbindungselements 66a. In einem verbundenen Zustand sind die Seitenteile 100a, 102a des Anbindungselements 66a durch die Durchgangsschlitze 120a der Formschlusselemente 68a, 70a des Grundkörpers 64a geführt und die Erhebungen 116a, 118a, die die Formschlusselemente 72a, 74a des Anbindungselements 66a bilden, hintergreifen schmale Bereiche der Durchgangsschlitze 120a. Dadurch kann das Anbindungselement 66a über seine Formschlusselemente 72a, 74a, die in den Formschlusselementen 68a, 70a des Grundkörpers 64a angeordnet sind, an einer Außenseite 78a des Grundkörpers 64a verschoben werden. Zwischen den beiden Formschlusselementen 68a, 70a bildet der Grundkörper 64a einen Steg 156a aus. Auf dem Steg 156a stützt sich das Anbindungselement 66a in einem mit dem Grundkörper 64a verbundenen Zustand ab. Dabei stützt sich das Anbindungselement 66a über den Bolzen 110a und die Buchse 154a auf dem Steg 156a des Grundkörpers 64a ab. Dabei rollt die Buchse 154a während einer Verschiebung des Anbindungselements 66a zu dem Grundkörper 64a auf dem Steg 156a ab. Dadurch kann eine reibungsarme Verschiebung des Anbindungselements 66a zu dem Grundkörper 64a erreicht werden.

Die Formschlusselemente 72a, 74a des Anbindungselements 66a sind dazu vorgesehen von radial außen mit den Formschlusselementen 68a, 70a des Grundkörpers 64a verbunden zu werden. Dazu weist der Grundkörper 64a zur Montage des Anbindungselements 66a an den Grundkörper 64a Montageausnehmungen 122a, 124a auf. Die Montageausnehmungen 122a, 124a sind an einem ersten Ende der Formschlusselemente 68a, 70a angeordnet. Jeweils eine Montageausnehmung 122a, 124a ist an dem ersten Ende eines Formschlusselements 68a, 70a des Grundkörpers 64a angeordnet. Die Montageausnehmungen 122a, 124a sind dabei als Durchgangsöffnungen ausgebildet, die sich wie die Durchgangsschlitze 120a der Formschlusselemente 68a, 70a von der Außenseite 78a des Grundkörpers 64a bis an die Innenseite 76a des Grundkörpers 64a erstrecken. Die Montageausnehmungen 122a, 124a weisen eine Breite auf, die größer ist als die Breite eines Seitenteils 100a, 102a des Anbindungselements 66a und der entsprechenden Erhebung 116a, 118a, die das entsprechende Formschlusselement 72a, 74a des Anbindungselements 66a ausbildet, zusammen. Eine Haupterstreckung der Montageausnehmung 122a, 124a ist größer als eine Haupterstreckung der Seitenteile 100a, 102a des Anbindungselements 66a. Dadurch kann das Anbindungselement 66a mit seinen Seitenteilen 100a, 102a durch die Montagausnehmungen 122a, 124a von radial außen nach innen geführt werden. Über die Montagausnehmungen 122a, 124a, die direkt an die Durchgangsschlitze 120a des jeweiligen Formschlusselements 68a, 70a des Grundkörpers 64a angrenzen, können die Formschlusselemente 72a, 74a des Anbindungselements 66a formschlüssig mit dem Anbindungselement 66a gekoppelt werden. Die Formschlusselemente 72a, 74a des Anbindungselements 66a werden bei einer Montage des Anbindungselements 66a an den Grundkörper 64a zunächst von radial außen durch die entsprechende Montageausnehmung 122a, 124a geführt, wodurch sich die Formschlusselemente 72a, 74a des Anbindungselements 66a mit ihren Erhebungen 116a, 118a auf der Innenseite 76a des Grundkörpers 64a befinden. Durch ein Verschieben des Anbindungselements 66a zu dem Grundkörper 64a in Richtung der Formschlusselemente 68a, 70a des Grundkörpers 64a greifen die Formschlusselemente 72a, 74a des Anbindungselements 66a in die Formschlusselemente 68a, 70a des Grundkörpers 64a ein und das Anbindungselement 66a ist über die als Führungselemente ausgebildeten Formschlusselemente 68a, 70a des Grundkörpers 64a entlang der Verschiebebahn verschiebbar mit dem Grundkörper 64a gekoppelt. Dabei sind die Montageausnehmungen 122a, 124a so angeordnet, dass in einem montierten Zustand - und insbesondere während eines Betriebs des als Flugzeugsitz ausgebildeten Sitzes - ein unerwünschtes Lösen des Anbindungselements 66a von dem Grundkörper 64a unmöglich ist.

Zur Begrenzung einer Verschiebung des Anbindungselements 66a zu dem Grundkörper 64a weist der Grundkörper 64a einen Anschlag 126a auf. Der Anschlag 126a ist auf der Außenseite 78a des Grundkörpers 64a angeordnet und erstreckt sich radial nach außen von dem Grundkörper 64a weg. Dabei ist der Anschlag 126a zwischen den beiden Formschlusselementen 68a, 70a des Grundkörpers 64a angeordnet. Der Anschlag 126a ist dabei an einem zweiten Ende der Formschlusselemente 68a, 70a des Grundkörpers 64a angeordnet, das dem ersten Ende, an dem die Montageausnehmungen 122a, 124a angeordnet sind, abgewandt ist. Der Anschlag 126a ist dazu vorgesehen, dass das Anbindungselement 66a in einer Verschieberichtung in einer Maximalstellung mit seinem Mittelbereich 104a an dem Anschlag 126a anschlägt und dass ein weiteres Verschieben des Anbindungselements 66a von dem ersten Ende der Formschlusselemente 68a, 70a weg unterbunden wird. Dabei schlägt die Buchse 154a an dem Anschlag 126a an und begrenzt einen Verfahrweg des Anbindungselements 66a.

Die Sitzbefestigungsvorrichtung umfasst ein Fixiermodul 16a. Das Fixiermodul 16a ist in einem montierten Zustand über zwei lösbare Koppelstellen 18a, 20a mit dem Anbindungsmodul 14a verbunden. Dabei umschließt das Fixiermodul 16a das Tragelement 12a teilweise. Das Fixiermodul 16a ist als eine Halbschale eines Schellenelements ausgebildet. Das Fixiermodul 16a ist dabei korrespondierend zu dem Grundkörper 64a des Anbindungsmoduls 14a ausgebildet. Zusammen umschließen das Fixiermodul 16a und der Grundkörper 64a des Anbindungsmoduls 14a das Tragelement 12a in Umfangsrichtung komplett. Eine Grundform des Fixiermoduls 16a entspricht einer Grundform des Grundkörpers 64a des Anbindungsmoduls 14a. Das Fixiermodul 16a weist eine Innenseite 128a auf, die einen Kreisbogen ausbildet. Dabei bildet die Innenseite 128a eine Winkelbereich von 180 Grad aus. Die Innenseite 128a des Fixiermoduls 16a bildet einen Halbkreis aus. Mit der Innenseite 128a liegt der Grundkörper 64a in einem mit dem Tragelement 12a verbundenen Zustand auf dem Tragelement 12a auf. Das Fixiermodul 16a weist eine Außenseite 130a auf, die ebenfalls einen Kreisbogen ausbildet. In den seitlichen Endbereichen bildet das Fixiermodul 16a Koppelbereiche 132a, 134a aus, über die das als Halbschale ausgebildete Fixiermodul 16a mit einer äquivalent ausgebildeten Halbschale, wie insbesondere dem Grundkörper 64a des Anbindungsmoduls 14a, verbindbar ist. Die Innenseite 128a des Fixiermoduls 16a bildet dabei in den Koppelbereichen 132a, 134a eine ebene Koppelfläche 136a, 138a aus. Die ebene Koppelfläche 136a, 138a verläuft dabei eben zu einer Radialrichtung. Zur Aufnahme der Befestigungselemente 92a, 94a weist das Fixiermodul 16a in den Koppelbereichen 132a, 134a jeweils ein Durchgangsloch 140a, 152a auf, das die entsprechende Koppelfläche 136a, 138a schneidet. Die Durchgangslöcher 140a, 152a erstrecken sich dabei jeweils von der Außenseite 130a bis an die Innenseite 128a, die die Koppelfläche 136a, 138a ausbildet. Die Durchgangslöcher 140a, 152a sind dabei jeweils in einer Ausnehmung 96a, 98a angeordnet. Die Ausnehmungen 96a, 98a sind dabei kreisrund ausgebildet und weisen einen größeren Durchmesser auf als das entsprechende Durchgangsloch 140a, 152a. Die Ausnehmungen 96a, 98a sind dazu vorgesehen, einen Kopf des Befestigungselements 92a, 94a aufzunehmen. Die Befestigungselemente 92a, 94a sind als Schrauben ausgebildet. Köpfe der als Schrauben ausgebildeten Befestigungselemente 92a, 94a sind in montiertem Zustand in den Ausnehmungen 96a, 98a des Grundkörpers 64a angeordnet und stützen sich jeweils auf einer Auflagefläche, die die Ausnehmungen 96a, 98a ausbilden, ab. Der Koppelbereich des Fixiermoduls 16a und der Koppelbereich des Grundkörpers 64a des Anbindungsmoduls 14a bilden die lösbaren Koppelstellen 18a, 20a, über die das Fixiermodul 16a mit dem Anbindungsmodul 14a verbindbar ist.

Zur Montage werden der Grundkörper 64a des Anbindungsmoduls 14a und das Fixiermodul 16a um das Tragelement 12a angeordnet und mit den Koppelflächen 84a, 86a, 136a, 138a ihrer Koppelbereiche 80a, 82a, 132a, 134a aneinander positioniert, sodass das Fixiermodul 16a und der Grundkörper 64a des Anbindungsmoduls 14a das Tragelement 12a in Umfangsrichtung komplett umschließen. Jeweils ein als Schraube ausgebildetes Befestigungselement 92a, 94a wird von dem Fixiermodul 16a aus durch die Durchgangslöcher 140a, 152a der Koppelbereiche 132a, 134a des Fixiermoduls 16a und die Durchgangslöcher 88a, 90a der Koppelbereiche 80a, 82a des Grundkörpers 64a geführt. In den Formschlusselementen 142a, 150a, die der Grundkörper 64a in den Koppelbereichen 80a, 82a aufweist, sind jeweils die als Muttern ausgebildeten Befestigungselemente 146a, 148a drehfest angeordnet. Die als Schrauben ausgebildeten Befestigungselemente 92a, 94a können dadurch einfach in die als Muttern ausgebildeten Befestigungselemente 146a, 148a eingeschraubt werden, ohne dass eine zusätzliche Haltekraft auf die als Muttern ausgebildeten Befestigungselemente 146a, 148a ausgeübt werden muss. Über die als Schrauben ausgebildeten Befestigungselemente 92a, 94a und die als Muttern ausgebildeten Befestigungselemente 146a, 148a werden der Grundkörper 64a des Anbindungsmoduls 14a und das Fixiermodul 16a fest miteinander verbunden, wobei sie sich über ihre Koppelflächen 84a, 86a, 136a, 138a gegeneinander abstützen. Dadurch bilden das Fixiermodul 16a und der Grundkörper 64a des Anbindungsmoduls 14a in Umfangsrichtung um das Tragelement 12a eine geschlossene Einheit.

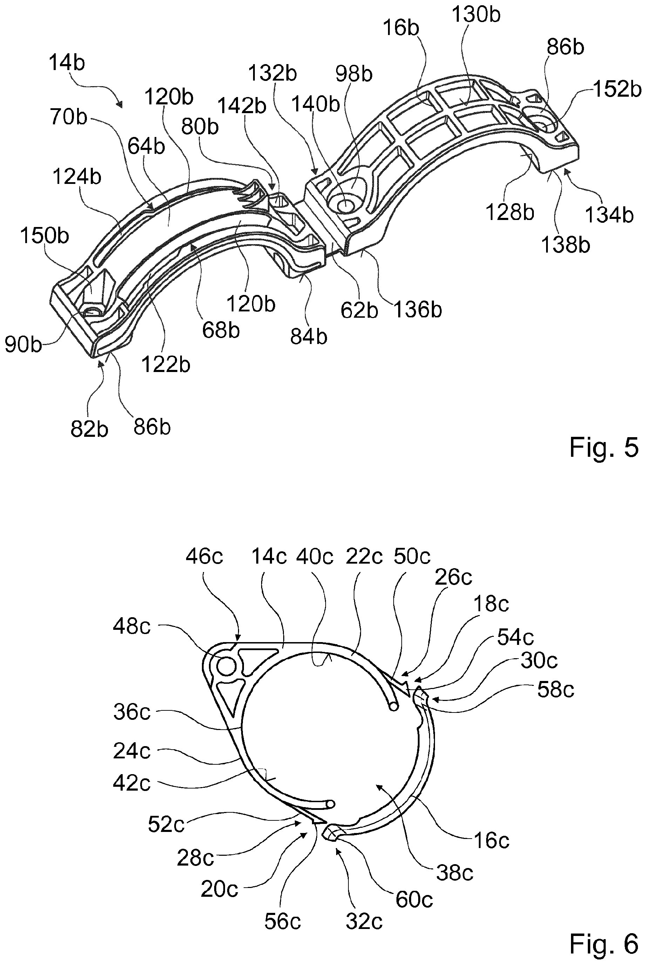

In den Figuren 5 bis 8 sind weitere Ausführungsbeispiele der Erfindung gezeigt. Die nachfolgende Beschreibung und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des ersten Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in Figuren 1 bis 4 nachgestellt. In den Ausführungsbeispielen der Figuren 5 bis 8 ist der Buchstabe a durch die Buchstaben b bis d ersetzt.

Die Figur 5 zeigt ein zweites Ausführungsbeispiel einer erfindungsgemäßen Sitzbefestigungsvorrichtung. Die Sitzbefestigungsvorrichtung ist im Wesentlichen identisch zu dem ersten Ausführungsbeispiel der Sitzbefestigungsvorrichtung aus den Figuren 1 bis 4 ausgebildet. Dabei umfasst die Sitzbefestigungsvorrichtung ein Anbindungsmodul 14b und ein Fixiermodul 16b, die in einem montierten Zustand ein Tragelement 12b eines als Flugzeugsitz ausgebildeten Sitzes umschließen. Das Anbindungsmodul 14b umfasst ein Anbindungselement 66b und einen Grundkörper 64b, die verschiebbar miteinander koppelbar sind. Dabei ist das Anbindungselement 66b fest mit einem Sitzelement 10b des Sitzes verbunden. Über das Anbindungsmodul 14b und das Fixiermodul 16b ist das Sitzelement 10b fest mit dem Tragelement 12b gekoppelt.

Im Unterschied zu dem ersten Ausführungsbeispiel aus den Figuren 1 bis 4 weist die Sitzbefestigungsvorrichtung ein Verbindungselement 62b auf, über das das Fixiermodul 16b permanent fest mit dem Anbindungsmodul 14b verbunden ist. Dadurch sind das Fixiermodul 16b und das Anbindungsmodul 14b verliersicher miteinander verbunden. Das Verbindungselement 62b ist als ein Filmscharnier ausgebildet, das fest mit dem Grundkörper 64b des Anbindungsmoduls 14b und fest mit dem Fixiermodul 16b verbunden ist. Dabei ist das als Filmscharnier ausgebildete Verbindungselement 62b an einer Außenseite eines Koppelbereichs 132b des Fixiermoduls 16b und an einer Außenseite eines in montiertem Zustand gegenüberliegenden Koppelbereichs 80b des Grundkörpers 64b des Anbindungsmoduls 14b angebracht. Dabei sind der Grundkörper 64b des Anbindungsmoduls 14b, das Fixiermodul 16b und das Verbindungselement 62b einstückig miteinander ausgebildet.

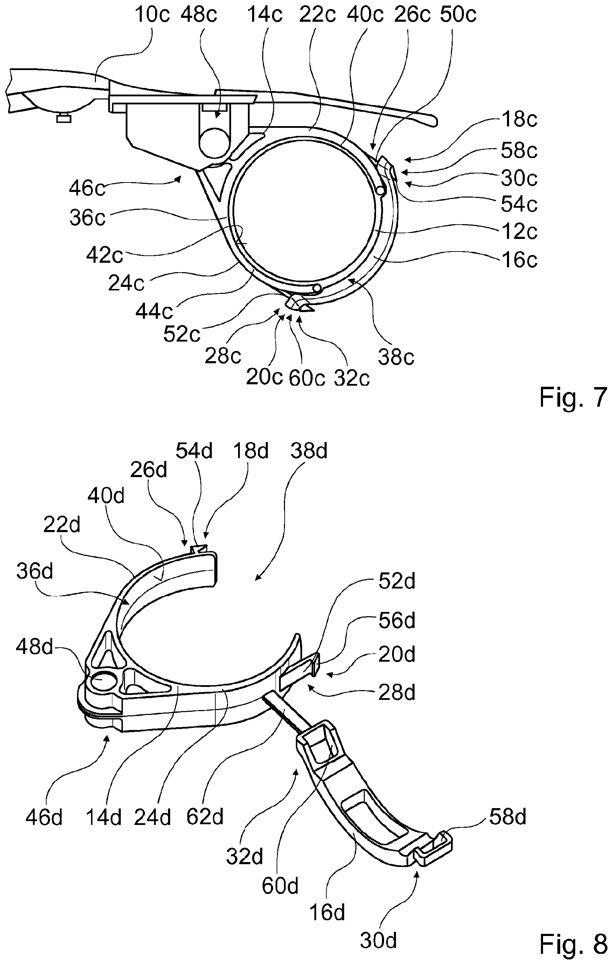

Die Figuren 6 und 7 zeigen einen Teil eines Sitzes mit einer erfindungsgemäßen Sitzbefestigungsvorrichtung in einem dritten Ausführungsbeispiel. Die Sitzbefestigungsvorrichtung ist als eine Flugzeugsitzbefestigungsvorrichtung ausgebildet. Der Sitz ist dabei als ein Flugzeugsitz ausgebildet. Der als Flugzeugsitz ausgebildete Sitz umfasst einen teilweise dargestellten Grundrahmen, mittels dessen der Sitz auf einem Kabinenboden einer Flugzeugkabine aufständerbar ist. Der Grundrahmen umfasst zwei Tragelemente 12c, die parallel zu einer Querrichtung des Sitzes ausgerichtet sind. Das erste Tragelement 12c ist als ein vorderes Querrohr und das zweite Tragelement 12c ist als ein hinteres Querrohr ausgebildet. Der Sitz umfasst ein Sitzelement 10c. Das Sitzelement 10c ist als ein Sitzboden ausgebildet. Das als Sitzboden ausgebildete Sitzelement 10c dient zur Aufnahme eines Sitzpolsters. Das als Sitzboden ausgebildete Sitzelement 10c ist dabei als eine Halbschale ausgebildet. Das als Sitzboden ausgebildete Sitzelement 10c ist über die als Querrohre ausgebildeten Tragelemente 12c an den Grundrahmen des Sitzes angebunden.

Zur Anbindung des als Sitzboden ausgebildeten Sitzelements 10c weist die Sitzbefestigungsvorrichtung Anbindungsmodule 14c, 34c auf. Zur Anbindung des Sitzelements 10c an das als vorderes Querrohr ausgebildete Tragelement 12c weist die Sitzbodenbefestigung zwei identisch ausgebildete Anbindungsmodule 14c, 34c auf, wobei lediglich eines der Anbindungsmodule 14c im Folgenden näher beschrieben werden soll. Zur Erläuterung des zweiten Anbindungsmoduls 34c zur Anbindung des Sitzelements 10c an das als vorderes Querrohr ausgebildete Tragelement 12c kann die folgende Beschreibung des ersten Anbindungsmoduls 14c herangezogen werden. Anbindungsmodule, die das Sitzelement 10c an das als hinteres Querrohr ausgebildete Tragelement 12c anbinden, werden im Folgenden nicht näher beschrieben, sind aber äquivalent zu den Anbindungsmodulen 14c, 34c ausgebildet. Grundsätzlich ist es aber auch denkbar, dass sie unterschiedlich zu den beschriebenen Anbindungsmodulen 14c, 34c ausgebildet sind. Grundsätzlich ist es auch denkbar, dass zur Anbindung des Sitzelements 10c eine andere Anzahl von Anbindungsmodulen 14c, 34c vorgesehen ist.

Das Anbindungsmodul 14c ist aus einem Kunststoff gebildet. Das Anbindungsmodul 14c umschließt das Tragelement 12c in einer Umfangsrichtung teilweise. Dabei umschließt das Anbindungsmodul 14c das Tragelement 12c zu mehr als 50 %. Das Anbindungsmodul 14c umgreift das Tragelement 12c und ist so formschlüssig mit dem Tragelement 12c verbunden. Das Anbindungsmodul 14c umfasst zwei gegenüberliegende Befestigungsarme 22c, 24c. Die Befestigungsarme 22c, 24c umgreifen das rohrförmige Tragelement 12c jeweils auf einer Seite. Die Befestigungsarme 22c, 24c bilden eine kreisförmige Aufnahme 36c aus, die in montiertem Zustand das Tragelement 12c teilweise umschließt. Die Befestigungsarme 22c, 24c des Anbindungsmoduls 14c bilden zusammen einen Rohrquerschnitt aus, der an einem unteren Ende eine Ausnehmung 38c ausbildet, die die kreisförmige Aufnahme 36c nach unten hin öffnet. Die Ausnehmung 38c ist dabei jeweils von unteren Enden der Befestigungsarme 22c, 24c gebildet. Die von dem Anbindungsmodul 14c ausgebildete kreisförmige Aufnahme 36c weist einen Innendurchmesser auf, der äquivalent zu einem Durchmesser des rohrförmigen Tragelements 12c ausgebildet ist. Die Befestigungsarme 22c, 24c weisen Innenseiten 40c, 42c auf, die in montiertem Zustand auf einer Mantelfläche 44c des Tragelements 12c aufliegen.

Das Anbindungsmodul 14c umfasst eine Aufnahme 46c, die zur Anbindung des Sitzelements 10c vorgesehen ist. Die Aufnahme 46c umfasst ein Durchgangsloch 48c, das parallel zu der kreisförmigen Aufnahme 36c ausgerichtet ist, mit der das Anbindungsmodul 14c mit dem Tragelement 12c verbindbar ist. Die Aufnahme 46c ist dabei einstückig mit den Befestigungsarmen 22c, 24c ausgebildet. Die Aufnahme 46c ist dabei in einem Bereich angeordnet, in dem die beiden Befestigungsarme 22c, 24c aufeinander treffen.

Zur verliersicheren Fixierung des Anbindungsmoduls 14c an das Tragelement 12c weist die Sitzbefestigungsvorrichtung ein Fixiermodul 16c auf. Das Fixiermodul 16c weist eine Breite auf, die in etwa einer Breite des Anbindungsmoduls 14c entspricht. Das Fixiermodul 16c ist schalenförmig ausgebildet und weist einen inneren Durchmesser auf, der dem Innendurchmesser des Anbindungsmoduls 14c entspricht. Der innere Durchmesser bildet ein Kreissegment aus, welches äquivalent zu der Ausnehmung 38c in der kreisförmigen Aufnahme 36c des Anbindungsmoduls 14c ausgebildet ist. Dadurch kann das Fixiermodul 16c die kreisförmige Aufnahme 36c des Anbindungsmoduls 14c in einem an dem Anbindungsmodul 14c montierten Zustand komplettieren und dadurch einen geschlossenen kreisförmigen Querschnitt herstellen. Das Fixiermodul 16c ist über zwei lösbare Koppelstellen 18c, 20c mit dem Anbindungsmodul 14c verbunden. Über die lösbaren Koppelstellen 18c, 20c ist das Anbindungsmodul 14c fest mit dem Fixiermodul 16c verbindbar, wobei die Verbindungen über die Koppelstellen 18c, 20c zerstörungsfrei trennbar sind. Die lösbaren Verbindungen des Anbindungsmoduls 14c und des Fixiermoduls 16c können bei intakten Koppelstellen 18c, 20c beliebig oft geschlossen und geöffnet werden. In einem montierten Zustand, in dem das Fixiermodul 16c über die beiden lösbaren Koppelstellen 18c, 20c mit dem Anbindungsmodul 14c gekoppelt ist, umschließen das Fixiermodul 16c und das Anbindungsmodul 14c das Tragelement 12c in Umfangsrichtung komplett. Das Fixiermodul 16c ist dabei als ein separates Bauteil ausgebildet und ist lediglich über die lösbaren Koppelstellen 18c, 20c mit dem Anbindungsmodul 14c verbindbar.

Die beiden lösbaren Koppelstellen 18c, 20c sind identisch zueinander ausgebildet. Grundsätzlich wäre es auch denkbar, dass die Koppelstellen 18c, 20c unterschiedlich ausgebildet sind und das Fixiermodul 16c beispielsweise auf unterschiedliche Weise mit dem Anbindungsmodul 14c koppeln. Auf einer Außenseite der Befestigungsarme 22c, 24c weist das Anbindungsmodul 14c jeweils ein Befestigungselement 26c, 28c auf. Jedes der an den Befestigungsarmen 22c, 24c angeordneten Befestigungselemente 26c, 28c bildet einen Teil der entsprechenden lösbaren Koppelstelle 18c, 20c aus.

Das Fixiermodul 16c weist zwei Befestigungselemente 30c, 32c auf, die korrespondierend zu den Befestigungselementen 26c, 28c des Anbindungsmoduls 14c ausgebildet sind. Jeweils ein Befestigungselement 30c, 32c ist dabei an einem in Umfangsrichtung ausgerichteten Ende des Fixiermoduls 16c angeordnet. Die Befestigungselemente 30c, 32c sind in montiertem Zustand jeweils einem der Befestigungsarme 22c, 24c des Anbindungsmoduls 14c zugewandt.

Die Befestigungselemente 26c, 28c, 30c, 32c sind als Rastelemente ausgebildet. Die Befestigungselemente 26c, 28c des Anbindungsmoduls 14c sind als biegbare Haken ausgebildet. Die als biegbare Haken ausgebildeten Befestigungselemente 26c, 28c sind jeweils an einer Außenseite der Befestigungsarme 22c, 24c angeordnet. Dabei sind die Befestigungselemente 26c, 28c des Anbindungsmoduls 14c jeweils an einem unteren Ende des entsprechenden Befestigungsarms 22c, 24c angebracht, das der Aufnahme 46c für das Sitzelement 10c abgewandt und der Ausnehmung 38c, die die kreisförmige Aufnahme 36c des Anbindungsmoduls 14c nach unten öffnet, zugewandt ist. Die als Haken ausgebildeten Befestigungselemente 26c, 28c sind jeweils an den Befestigungsarm 22c, 24c des Anbindungsmoduls 14c einstückig angeformt. Dabei weisen die Befestigungselemente 26c, 28c jeweils einen dem Anbindungsmodul 14c zugewandten elastisch biegbaren Steg 50c, 52c auf und an einem dem Anbindungsmodul 14c abgewandten Ende jeweils einen nach außen gerichteten Rasthaken 54c, 56c auf, der in Richtung des dem Anbindungsmodul 14c abgewandten Endes spitz zuläuft.

Die Befestigungselemente 30c, 32c des Fixiermoduls 16c weisen jeweils eine Rastausnehmung 58c, 60c auf, in die das jeweilige, als Haken ausgebildete Befestigungselement 26c, 28c des Anbindungsmoduls 14c formschlüssig eingreift. Die als Haken ausgebildeten Befestigungselemente 26c, 28c des Anbindungsmoduls 14c werden zur Verbindung mit den Befestigungselementen 30c, 32c des Fixiermoduls 16c leicht elastisch nach innen ausgelenkt und durch die Rastausnehmung 58c, 60c des entsprechenden Befestigungselements 30c, 32c geführt. Die als Haken ausgebildeten Befestigungselemente 26c, 28c des Anbindungsmoduls 14c schnappen, nachdem sie mit ihren Rasthaken 54c, 56c durch die Rastausnehmungen 58c, 60c geführt wurden, hinter die Rastausnehmungen 58c, 60c zurück und hintergreifen dadurch die entsprechende Rastausnehmung 58c, 60c. Durch den Hintergriff der Rasthaken 54c, 56c der Befestigungselemente 26c, 28c des Anbindungsmoduls 14c hinter die Rastausnehmung 58c, 60c der Befestigungselemente 30c, 32c des Fixiermoduls 16c sind das Anbindungsmodul 14c und das Fixiermodul 16c formschlüssig miteinander verbunden. Die lösbaren Koppelstellen 18c, 20c sind durch Einrasten der Rasthaken 54c, 56c in die entsprechende Rastausnehmung 58c, 60c geschlossen. Zum Öffnen der lösbaren Koppelstellen 18c, 20c werden die als Haken ausgebildeten Befestigungselemente 26c, 28c nach innen ausgelenkt und können so mit ihren Rasthaken 54c, 56c aus den Rastausnehmungen 58c, 60c der Befestigungselemente 30c, 32c des Fixiermoduls 16c gleiten. Danach kann das Fixiermodul 16c von dem Anbindungsmodul 14c gelöst werden.

Grundsätzlich wäre es auch denkbar, dass die Ausbildung der als Rastelemente ausgebildeten Befestigungselemente 26c, 28c, 30c, 32c umgekehrt zu der oben beschriebenen Weise ausgestaltet ist. Dabei wäre es denkbar, dass die Befestigungselemente 30c, 32c des Fixiermoduls 16c als Haken ausgebildet sind und die Befestigungselemente 26c, 28c des Anbindungsmoduls 14c Ausnehmungen aufweisen, in die die Befestigungselemente 30c, 32c des Fixiermoduls 16c eingreifen. Grundsätzlich sind auch andersartige Ausgestaltungen der Befestigungselemente 26c, 28c, 30c, 32c als Rastelemente denkbar. Grundsätzlich ist es auch denkbar, dass die Befestigungselemente 26c, 28c, 30c, 32c als dem Fachmann als sinnvoll erscheinende Formschlusselemente ausgebildet sind, die beispielsweise ein weiteres bewegliches Bauteil aufweisen, das zur Verbindung des Fixiermoduls 16c mit dem Anbindungsmodul 14c zwischen einer geöffneten und einer geschlossenen Stellung verschwenk- und/oder verschiebbar ist.

Figur 8 zeigt eine erfindungsgemäße Sitzbefestigungsvorrichtung in einem vierten Ausführungsbeispiel. Die Sitzbefestigung ist als eine Flugzeugsitzbefestigung ausgebildet. Zur Anbindung eines als Sitzboden ausgebildeten Sitzelements 10d weist die Sitzbefestigungsvorrichtung Anbindungsmodule 14d auf. Das Anbindungsmodul 14d ist aus einem Kunststoff gebildet. Das Anbindungsmodul 14d umgreift ein Tragelement 12d und ist so formschlüssig mit dem Tragelement 12d verbunden. Das Anbindungsmodul 14d umfasst zwei gegenüberliegende Befestigungsarme 22d, 24d. Die Befestigungsarme 22d, 24d umgreifen das rohrförmige Tragelement 12d jeweils auf einer Seite.

Zur verliersicheren Fixierung des Anbindungsmoduls 14d an das Tragelement 12d weist die Sitzbefestigungsvorrichtung ein Fixiermodul 16d auf. Das Fixiermodul 16d ist über zwei lösbare Koppelstellen 18d, 20d mit dem Anbindungsmodul 14d verbunden. Über die lösbaren Koppelstellen 18d, 20d ist das Anbindungsmodul 14d fest mit dem Fixiermodul 16d verbindbar, wobei die Verbindung über die Koppelstellen 18d, 20d zerstörungsfrei trennbar ist. Das Anbindungsmodul 14d und das Fixiermodul 16d sind im Wesentlichen gleich ausgebildet wie in dem dritten Ausführungsbeispiel der Figur 7, weswegen auf eine genauere Beschreibung an dieser Stelle verzichtet und auf die Beschreibung des dritten Ausführungsbeispiels verwiesen wird.

Im Unterschied zu dem dritten Ausführungsbeispiel weist die Sitzbefestigungsvorrichtung ein Verbindungselement 62d auf, über das das Fixiermodul 16d zur Verliersicherung permanent und fest mit dem Anbindungsmodul 14d verbunden ist. Das Verbindungselement 62d ist als ein Filmscharnier ausgebildet, das an einem Ende fest mit dem Fixiermodul 16d und an einem anderen Ende fest mit dem Anbindungsmodul 14d verbunden ist. Durch das Verbindungselement 62d ist das Fixiermodul 16d, auch wenn die lösbaren Koppelstellen 18d, 20d geöffnet sind, fest mit dem Anbindungsmodul 14d verbunden und kann somit nicht verloren gehen.

Dabei sind das Anbindungsmodul 14d, das Fixiermodul 16d und das Verbindungselement 62d einstückig miteinander ausgebildet. Das Anbindungsmodul 14d, das Fixiermodul 16d und das Verbindungselement 62d sind gemeinsam aus einem Kunststoff gebildet. Das Verbindungselement 62d ist einstückig an eine Außenseite eines der Befestigungsarme 22d des Anbindungsmoduls 14d und einstückig an eine Außenseite des Fixiermoduls 16d angeformt. Das einstückige Bauteil, das sowohl das Anbindungsmodul 14d als auch das Fixiermodul 16d und das Verbindungselement 62d umfasst, ist dabei beispielsweise in einem Kunststoffspritzgussverfahren oder einem anderen, dem Fachmann als sinnvoll erscheinenden Verfahren hergestellt. Grundsätzlich ist es dabei ebenfalls denkbar, dass das Anbindungsmodul 14d, das Fixiermodul 16d und/oder das Verbindungselement 62d aus einem anderen Material, wie beispielsweise einem Metall oder einem anderen natürlichen oder künstlichen Material, gebildet ist.

### Bezugszeichen

- 10: Sitzelement
- 12: Tragelement
- 14: Anbindungsmodul
- 16: Fixiermodul
- 18: Koppelstelle
- 20: Koppelstelle
- 22: Befestigungsarm
- 24: Befestigungsarm
- 26: Befestigungselement
- 28: Befestigungselement
- 30: Befestigungselement
- 32: Befestigungselement
- 34: Anbindungsmodul
- 36: kreisförmige Aufnahme
- 38: Ausnehmung
- 40: Innenseite
- 42: Innenseite
- 44: Mantelfläche
- 46: Aufnahme
- 48: Durchgangsloch
- 50: Steg
- 52: Steg
- 54: Rasthaken
- 56: Rasthaken
- 58: Rastausnehmung
- 60: Rastausnehmung
- 62: Verbindungselement
- 64: Grundkörper
- 66: Anbindungselement
- 68: Formschlusselement
- 70: Formschlusselement
- 72: Formschlusselement
- 74: Formschlusselement
- 76: Innenseite
- 78: Außenseite
- 80: Koppelbereich
- 82: Koppelbereich
- 84: Koppelfläche
- 86: Koppelfläche
- 88: Durchgangsloch
- 90: Durchgangsloch
- 92: Befestigungselement
- 94: Befestigungselement
- 96: Ausnehmung
- 98: Ausnehmung
- 100: Seitenteil
- 102: Seitenteil
- 104: Mittelbereich
- 106: Aufnahme
- 108: Durchgangsloch
- 110: Bolzen
- 112: Aufnahme
- 114: Wandung
- 116: Erhebung
- 118: Erhebung
- 120: Durchgangsschlitz
- 122: Montageausnehmung
- 124: Montageausnehmung
- 126: Anschlag
- 128: Innenseite
- 130: Außenseite
- 132: Koppelbereich
- 134: Koppelbereich
- 136: Koppelfläche
- 138: Koppelfläche
- 140: Durchgangsloch
- 142: Formschlusselement
- 146: Befestigungselement
- 148: Befestigungselement
- 150: Formschlusselement
- 152: Durchgangsloch
- 154: Buchse
- 156: Steg

## Patentansprüche

1. Sitzbefestigungsvorrichtung, insbesondere Flugzeugsitzbefestigungsvorrichtung, zur Befestigung eines Sitzelements (10a; 10c), insbesondere eines Sitzbodens, an einem Tragelement (12a; 12c), mit einem Anbindungsmodul (14a, 34a; 14b; 14c; 14d), das zur Anbindung an das Tragelement (12a; 12c) dazu vorgesehen ist, das Tragelement (12a; 12c) in einem montierten Zustand zumindest teilweise in einer Umfangsrichtung zu umschließen, mit einem Fixiermodul (16a; 16b; 16c; 16d), das im montierten Zustand über zumindest eine lösbare Koppelstelle (18a, 20a; 18b, 20b; 18c, 20c; 18d, 20d) mit dem Anbindungsmodul (14a, 34a; 14b; 14c; 14d) verbunden ist und das Tragelement (12a; 12c) teilweise umschließt, wobei das Anbindungsmodul (14a, 34a; 14b) einen Grundkörper (64a; 64b) umfasst, **dadurch gekennzeichnet, dass** das Anbindungsmodul (14a, 34a; 14b) zumindest ein Anbindungselement (66a; 66b) umfasst, das in zumindest einem montierten Betriebszustand verschiebbar mit dem Grundkörper (64a; 64b) verbunden ist und dazu vorgesehen ist, das Sitzelement (10a; 10c) an das Anbindungsmodul (14a; 34a; 14b; 14c; 14d) anzubinden.

2. Sitzbefestigungsvorrichtung nach Anspruch 1, **dadurch gekennzeichnet, dass** das Fixiermodul (16a; 16b) als eine Halbschale eines Schellenelements ausgebildet ist.

3. Sitzbefestigungsvorrichtung nach Anspruch 1 oder 2, **dadurch gekennzeichnet, dass** das Anbindungsmodul (14a, 34a; 14b) zumindest einen Grundkörper (64a; 64b) umfasst, der als eine Halbschale eines Schellenelements ausgebildet ist.

4. Sitzbefestigungsvorrichtung nach einem der vorhergehenden Ansprüche, **dadurch gekennzeichnet, dass** das Anbindungselement (66a; 66b) dazu vorgesehen ist, formschlüssig mit dem Grundkörper (64a; 64b) verbunden zu werden.

5. Sitzbefestigungsvorrichtung zumindest nach einem der vorhergehenden Ansprüche, **dadurch gekennzeichnet, dass** der Grundkörper (64a; 64b) zur Anbindung des Anbindungselements (66a; 66b) wenigstens ein Formschlusselement (68a, 70a; 68b, 70b) aufweist, das als ein Führungselement ausgebildet ist.

6. Sitzbefestigungsvorrichtung nach Anspruch 5, **dadurch gekennzeichnet, dass** das Anbindungselement (66a; 66b) zumindest ein Formschlusselement (72a, 74a; 72b, 74b) aufweist, das zur formschlüssigen Verbindung mit dem Grundkörper (64a; 64b) dazu vorgesehen ist, in einen formschlüssigen Kontakt mit dem Formschlusselement (68a, 70a; 68b, 70b) des Grundkörpers (64a; 64b) zu treten.

7. Sitzbefestigungsvorrichtung nach Anspruch 6, **dadurch gekennzeichnet, dass** das Formschlusselement (72a, 74a; 72b, 74b) des Anbindungselements (66a; 66b) dazu vorgesehen ist, von radial außen mit dem Formschlusselement (68a, 70a; 68b, 70b) des Grundkörpers (64a; 64b) verbunden zu werden.

8. Sitzbefestigungsvorrichtung nach einem der vorhergehenden Ansprüche, **dadurch gekennzeichnet, dass** der Grundkörper (64a; 64b) einen Anschlag (126a; 126b) aufweist, der ein Verschieben des Anbindungselements (66a; 66b) in zumindest einer Verschieberichtung auf eine Maximalstellung beschränkt.

9. Sitzbefestigungsvorrichtung nach einem der vorhergehenden Ansprüche, **dadurch gekennzeichnet, dass** das Anbindungsmodul (14a, 34a; 14b; 14c; 14d) und das Fixiermodul (16a; 16b; 16c; 16d) in montiertem Zustand zusammen dazu vorgesehen sind, das Tragelement (12a; 12c) in Umfangsrichtung komplett zu umschließen.

10. Sitzbefestigungsvorrichtung nach einem der vorhergehenden Ansprüche, **gekennzeichnet durch** zumindest ein Verbindungselement (62b; 62d), über das das Fixiermodul (16b; 16d) zur Verliersicherung permanent und fest mit dem Anbindungsmodul (14b; 14d) verbunden ist.

11. Sitzbefestigungsvorrichtung nach Anspruch 10, **dadurch gekennzeichnet, dass** das Anbindungsmodul (14b; 14d), das Fixiermodul (16b; 16d) und das zumindest eine Verbindungselement (62b; 62d) einstückig miteinander ausgebildet sind.

12. Sitzbefestigungsvorrichtung nach einem der vorhergehenden Ansprüche, **dadurch gekennzeichnet, dass** das Anbindungsmodul (14c; 14d) zwei sich gegenüberliegende Befestigungsarme (22c, 24c; 22d, 24d) aufweist, die dazu vorgesehen sind, das Tragelement (12c) auf jeweils einer Seite zu umgreifen, wobei jeder der Befestigungsarme (22c, 24c; 22d, 24d) ein Befestigungselement (26c, 28c; 26d, 28d) aufweist, das jeweils einen Teil einer lösbaren Koppelstelle (18c, 20c; 18d, 20d) ausbildet.

13. Flugzeugsitz mit einer Sitzbefestigungsvorrichtung nach einem der vorhergehenden Ansprüche.

## Claims

1. Seat attachment device, in particular airplane seat attachment device, for fixating a seat element (10a; 10c), in particular a seat bottom, to a support element (12a; 12c), with a connection module (14a, 34a; 14b; 14d) configured, for the purpose of connecting to the support element (12a; 12c), to at least partly enclose the support element (12a; 12c) in a circumferential direction in a mounted state, with a fixation module (16a; 16b; 16c; 16d), which is in a mounted state connected to the connection module (14a, 34a; 14b; 14c; 14d) via at least one releasable coupling point (18a, 20a; 18b, 20b; 18c, 20c; 18d, 20d) and partially encloses the support element (12a; 12c), wherein the connection module (14a, 34a; 14b) comprises a base body (64a; 64b), **characterised in that** the connection module (14a, 34a; 14b) comprises at least one connection element (66a; 66b) which is in at least one mounted operative state slideably connected to the base body (64a; 64b) and is configured for connecting the seat element (10a; 10c) to the connection module (14a, 34a; 14b; 14c; 14d).

2. Seat attachment device according to claim 1, **characterised in that** the fixation module (16a; 16b) is embodied as a half-shell of a clamp element.

3. Seat attachment device according to claim 1 or 2, **characterised in that** the connection module (14a, 34a; 14b) comprises at least one base body (64a; 64b), which is embodied as a half-shell of a clamp element.

4. Seat attachment device according to one of the preceding claims, **characterised in that** the connection element (66a; 66b) is configured to be connected to the base body (64a; 64b) in a form-fit manner.

5. Seat attachment device at least according to one of the preceding claims, **characterised in that,** for connecting the connection element (66a; 66b), the base body (64a; 64b) comprises at least one form-fit element (68a, 70a; 68b, 70b), which is implemented as a guiding element.

6. Seat attachment device according to claim 5, **characterised in that** the connection element (66a; 66b) comprises at least one form-fit element (72a, 74a; 72b, 74b) which is, for the purpose of a form-fit connection to the base body (64a; 64b), configured to establish a form-fit contact to the form-fit element (68a, 70a; 68b, 70b) of the base body (64a; 64b).

7. Seat attachment device according to claim 6, **characterised in that** the form-fit element (72a, 74a; 72b, 74b) of the connection element (66a; 66b) is configured to be connected to the form-fit element (68a, 70a; 68b, 70b) of the base body (64a; 64b) radially from the outside.

8. Seat attachment device according to one of the preceding claims, **characterised in that** the base body (64a; 64b) comprises a stop (126a; 126b) restricting a displacement of the connection element (66a; 66b) in at least one displacement direction to a maximum position.

9. Seat attachment device according to one of the preceding claims, **characterised in that** the connection module (14a, 34a; 14b, 14c; 14d) and the fixation module (16a; 16b; 16c; 16d) are in the mounted state together configured to completely encompass the support element (12a; 12c) in a circumferential direction.

10. Seat attachment device according to one of the preceding claims, **characterised by** at least one connection element (62b; 62d), via which the fixation module (16b; 16d) is permanently and fixedly connected to the connection module (14b; 14d) for ensuring a captive situation.

11. Seat attachment device according to claim 10, **characterised in that** the connection module (14b; 14d), the fixation module (16b; 16d) and the at least one connection element (62b; 62d) are embodied in a one-part implementation with each other.

12. Seat attachment device according to one of the preceding claims, **characterised in that** the connection module (14c; 14d) comprises two fastening arms (22c, 24c; 22d, 24d), which are situated opposite each other and are configured for engaging around the support element (12c) on one side respectively, wherein each of the fastening arms (22c, 24c; 22d, 24d) comprises a fixation element (26c, 28c; 26d, 28d) each of which implements a portion of a releasable coupling point (18c, 20c; 18d, 20d).

13. Airplane seat with a seat attachment device according to one of the preceding claims.

## Revendications

1. Dispositif de fixation de siège, notamment dispositif de fixation de siège aéronef, pour fixer un élément de siège (10a ; 10c), en particulier un fond de siège, à un élément porteur (12a ; 12c), avec un module connectif (14a, 34a ; 14b ; 14c ; 14d) configuré, en vue d'une connexion à l'élément porteur (12a ; 12c), pour au moins partiellement entourer l'élément porteur (12a ; 12c) au moins partiellement dans une direction circonférentielle à l'état monté, avec un module à fixation (16a ; 16b ; 16c ; 16d), lequel est, à l'état monté, raccordé au module connectif (14a, 34a ; 14b ; 14c ; 14d) via au moins un point de couplage relâchable (18a, 20a ; 18b, 20b ; 18c, 20c ; 18d, 20d) et lequel entoure l'élément porteur (12a ; 12c) partiellement, le module connectif (14a, 34a ; 14b) comprenant un corps de base (64a ; 64b), **caractérisé en ce que** le module connectif (14a, 34a ; 14b) comporte au moins un élément connectif (66a ; 66b), lequel est, à au moins un état opératif monté, raccordé au corps de base (64a ; 64b) de façon déplaçable et est configuré pour raccorder l'élément de siège (10a ; 10c) au module connectif (14a, 34a ; 14b ; 14c ; 14d).

2. Dispositif de fixation de siège selon la revendication 1, **caractérisé en ce que** le module à fixation (16a ; 16b) est implémenté comme une demi-coquille d'un élément collier.

3. Dispositif de fixation de siège selon la revendication 1 ou 2, **caractérisé en ce que** le module connectif (14a, 34a ; 14b) comporte au moins un corps de base (64 ; 64b) implémenté comme une demi-coquille d'un élément collier.

4. Dispositif de fixation de siège selon l'une quelconque des revendications précédentes, **caractérisé en ce que** l'élément connectif (66a ; 66b) est prévu à être raccordé par forme au corps de base (64a ; 64b).

5. Dispositif de fixation de siège selon l'une quelconque des revendications précédentes, **caractérisé en ce que** le corps de base (64a ; 64b) comporte, pour la connexion de l'élément connectif (66a ; 66b), au moins un élément connectif par forme (68a, 70a ; 68b, 70b) implémenté comme élément à guidage.

6. Dispositif de fixation de siège selon la revendication 5, **caractérisé en ce que** l'élément connectif (66a ; 66b) comporte au moins un élément connectif par forme (72a, 74a ; 72b ; 74b) prévu à se mettre en contact avec l'élément connectif par forme (68a, 70a ; 68b, 70b) du corps de base (64a ; 64b).

7. Dispositif de fixation de siège selon la revendication 6, **caractérisé en ce que** l'élément connectif par forme (72a, 74 ; 72b ; 74b) de l'élément connectif (66a ; 66b) est prévu à être raccordé à l'élément connectif par forme (68a, 70a ; 68b, 70b) du corps de base (64a ; 64b) radialement de l'extérieur.

8. Dispositif de fixation de siège selon l'une quelconque des revendications précédentes, **caractérisé en ce que** le corps de base (64a ; 64b) comporte une butée (126a ; 126b) restreignant un déplacement de l'élément connectif (66a ; 66b) à une position maximale dans au moins une direction de déplacement.

9. Dispositif de fixation de siège selon l'une quelconque des revendications précédentes, **caractérisé en ce que** le module connectif (14a, 34a ; 14b ; 14c ; 14d) et le module de fixation (16a ; 16b ; 16c ; 16d) sont prévus, à l'état monté, à complètement entourer l'élément porteur (12a ; 12c) dans une direction circonférentielle.

10. Dispositif de fixation de siège selon l'une quelconque des revendications précédentes, **caractérisé par** au moins un élément connectif (62b ; 62d), par le biais duquel le module de fixation (16b ; 16d) est raccordé au module connectif (14b ; 14d) de manière permanente et fixe pour établir une situation inamovible.

11. Dispositif de fixation de siège selon la revendication 10, **caractérisé en ce que** le module connectif (14b ; 14d), le module de fixation (16b ; 16d) et l'au moins un élément connectif (62b ; 62d) sont implémentés intégralement.

12. Dispositif de fixation de siège selon l'une quelconque des revendications précédentes, **caractérisé en ce que** le module connectif (14c ; 14d) comporte deux bras à fixation (22c, 24c ; 22d, 24d) situés l'un envers l'autre et configurés pour engager autour de l'élément porteur (12c) sur au moins un côté, chacun des bras à fixation (22c, 24c ; 22d, 24d) comportant un élément à fixation (26c, 28c ; 26d, 28d), lequel implémente respectivement un composant d'un point de couplage relâchable (18c, 20c ; 18d, 20d).

13. Siège d'aéronef avec un dispositif de fixation de siège selon l'une quelconque des revendications précédentes.
